# Europäisches Patentamt
# European Patent Office
# Office européen des brevets

(19)

(11) Numéro de publication: **0 025 750**
**B1**

(12)

# FASCICULE DE BREVET EUROPEEN

(45) Date de publication du fascicule du brevet: **22.12.82**

(51) Int. Cl.³: **F 16 H 25/22**

(21) Numéro de dépôt: **80401269.8**

(22) Date de dépôt: **05.09.80**

(54) **Mécanisme débrayable, de vis et écrou à roulement.**

(30) Priorité: **11.09.79 FR 7922658**

(43) Date de publication de la demande:
**25.03.81 Bulletin 81/12**

(45) Mention de la délivrance du brevet:
**22.12.82 Bulletin 82/51**

(84) Etats contractants désignés:
**CH DE GB LI NL SE**

(56) Documents cités:
**DE - A - 1 905 284**
**DE - B - 1 172 092**
**FR - A - 2 345 631**
**GB - A - 1 451 888**
**SU - A - 178 261**
**US - A - 2 770 155**
**US - A - 2 844 969**
**US - A - 2 933 939**
**US - A - 3 546 930**

(73) Titulaire: **LA TECHNIQUE INTEGRALE Société dité:**
**Rue Félix Esclangon**
**F-73003 Chambery (FR)**

(72) Inventeur: **Druet, Clair**
**2, Chemin du Printemps**
**F-73100 Brison Saint-Innocent (FR)**

(74) Mandataire: **Blétry, Robert et al,**
**OFFICE BLETRY 2, Boulevard de Strasbourg**
**F-75010 Paris (FR)**

Courier Press, Leamington Spa, England.

Mécanisme débrayable, de vis et écrou à roulement.

Les mécanismes de vis et écrou à roulement sont constitués par une vis intérieure, un écrou extérieur coaxial formant douille, le diamètre extérieur de la vis étant inférieur au diamètre intérieur de l'écrou, de façon à laisser entre eux un espace annulaire libre, dans lequel sont logés des éléments roulants tels que billes ou rouleaux satellites, filetés ou à gorges circulaires, en prise simultanément avec le filetage de la vis et le taraudage de la douille, la rotation relative de la vis dans la douille donnant ainsi lieu à des frottements de roulement, et rendant presque négligeables les frottements de glissement.

Un tel mécanisme comporte, bien entendu, des dispositifs appropriés de recyclage des billes et des rouleaux, pour les ramener dans leur position d'origine quand le déplacement angulaire relatif de la vis dans la douille a provoqué un déplacement axial des billes ou des rouleaux égal à un pas de vis de la vis.

On connait déjà par le brevet US—A 2.770.155 un tel mécanisme susceptible d'être débrayé dans certaines conditions; à cet effet, soit le filetage de la vis intérieure, soit le taraudage de l'écrou extérieur coaxial ont un profil spécial et des moyens sont prévus pour permettre de faire coulisser longitudinalement les éléments roulants, d'une position extrême par rapport à la vis, dans un cas, ou par rapport à l'écrou dans l'autre cas, à une position extrême opposée telle que, dans une de ces deux positions extrêmes, "embrayée", les éléments roulants soient en prise simultanément avec le filetage de la vis et le taraudage de l'écrou, tandis que dans l'autre position extrême "débrayée" ces éléments roulants ne soient plus en prise simultanément avec le filetage de la vis et le taraudage de l'écrou.

Pour permettre le débrayage de la vis, la douille du mécanisme vis et écrou à roulement suivant la présente invention est réalisée en plusieurs parties, pouvant s'écarter radialement pour permettre de libérer la vis de toute prise avec les éléments roulants à tout instant que l'ensemble soit immobile ou en rotation indifférente et quelque soit la direction de la charge axiale.

Les éléments roulants doivent cependant rester dans une position relative telle qu'à tout instant il soit possible de les réengager avec le filetage de la vis et le taraudage ou les gorges circulaires intérieures de la douille, pour assurer à nouveau le fonctionnement vis-écrou lorsque, par une manoeuvre inverse, on provoque le rapprochement radial, vers l'axe de la vis, des différents éléments constitutifs de la douille.

A cet effet, les éléments roulants sont logés dans les alvéoles d'une cage les maintenant constamment dans une même position angulaire relative, correspondant au fonctionnement normal vis-écrou; ces alvéoles sont tels qu'ils permettent un déplacement radial vers l'extérieur des éléments roulants dans ceux-ci, sans toutefois se dégager desdits alvéoles, ce déplacement étant suffisant pour libérer les éléments roulants de toute prise avec le filetage de la vis, ainsi qu'un déplacement axial des éléments roulants dans ceux-ci au moins égal à un pas de vis du filetage de la vis, pour permettre leur translation dans un sens, provoqué par le déplacement angulaire de la vis dans la douille, et en sens inverse, pour leur recyclage quand ils viennent au droit d'alvéoles prévus à cet effet dans la douille, dont le fond est exempt de taraudages ou de gorges circulaires, de façon connue.

Dans les mécanismes classiques de vis et écrou à roulement, la cage qui maintient l'espacement angulaire désiré entre les rouleaux ou les billes est centrée par son contact avec la douille, ou, plus exactement, avec une partie non taraudée de cette douille; elle est ainsi également centrée par rapport à la vis; toutefois, dans le dispositif suivant la présente invention, agencé de telle façon que la douille soit constituée de plusieurs éléments susceptibles de s'écarter radialement pour libérer les rouleaux, après un tel écartement et le débrayage de la vis qui en résulte, la cage n'est plus centrée et elle risque par conséquent de venir en contact avec la vis, dont elle peut éventuellement empêcher la chute libre sous l'effet de son poids.

Pour éviter cet inconvénient, suivant la présente invention, la cage est centrée par rapport à la vis; à cet effet, l'ensemble de ce mécanisme débrayable, de vis et écrou à roulement, est disposé à l'intérieur d'un boîtier, permettant de déplacement radial des éléments de la douille, et comportant éventuellement le dispositif de commande de ce déplacement, et la vis et la cage sont centrées par rapport à ce boîtier.

Le dessin annexé montre à titre d'exemple différents modes de réalisation de la présente invention.

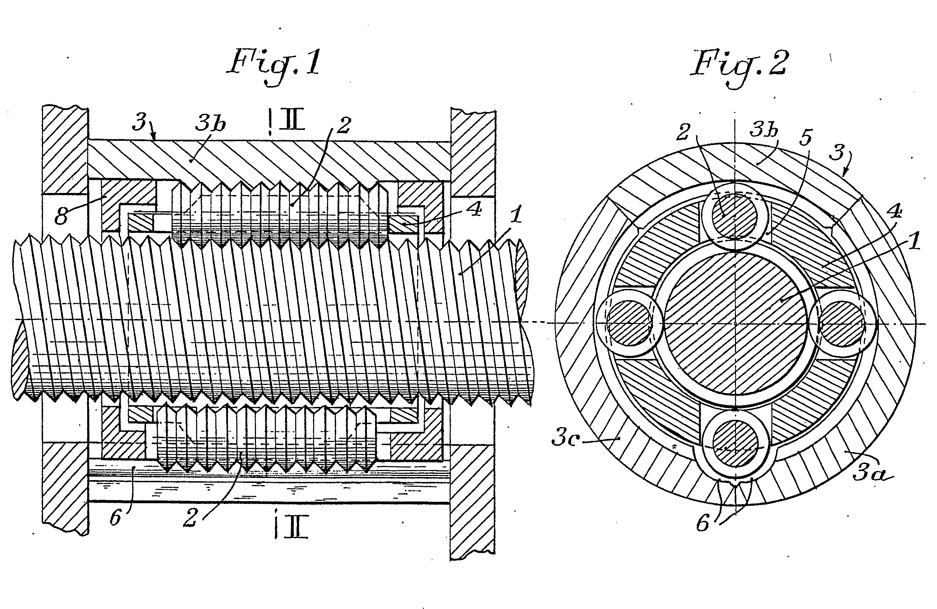

La figure 1 est une vue en coupe longitudinale d'un tel mécanisme débrayable, de vis et écrou à roulement.

La figure 2 est une vue en coupe faite suivant la ligne II—II de la figure 1.

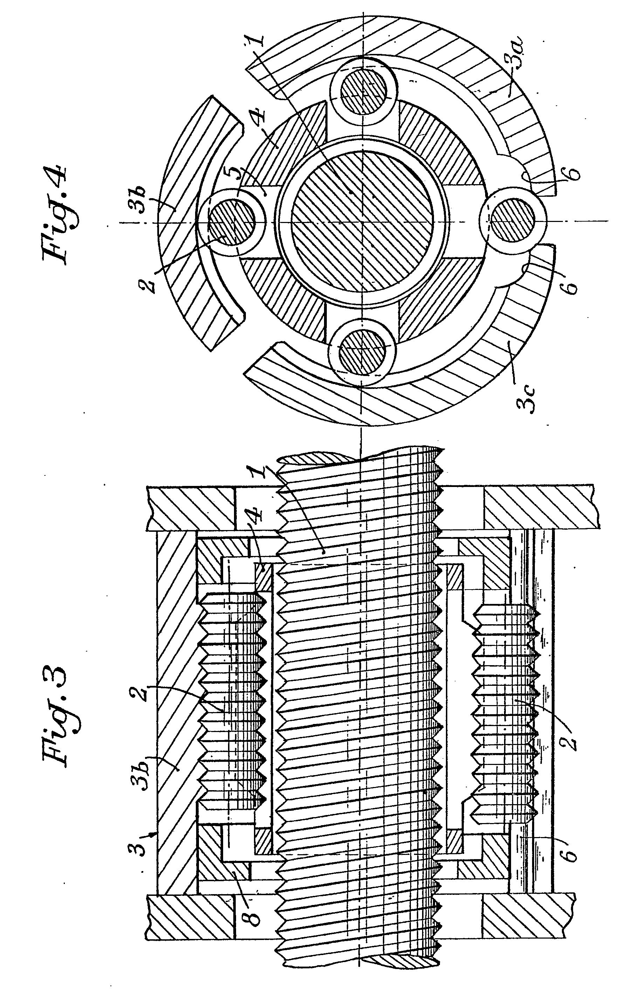

Les figures 3 et 4 sont des vues analogues à celles des figures 1 et 2 du mécanisme en position débrayée.

Les figures 5 et 6 sont des vues de face, à plus petite échelle, avec arrachement partiel, de la vis et de la cage contenant un rouleau dans un case, et des billes dans l'autre, abstraction faite de la douille.

Les figures 7 et 8 sont des vues en coupe partielles, à plus grande échelle, la première en position débrayée, et la seconde en position embrayée, montrant un dispositif permettant la reprise de l'engrènement des rouleaux, avec la douille, lors de l'embrayage.

Les figures 9 et 10 sont des vues analogues d'une variante.

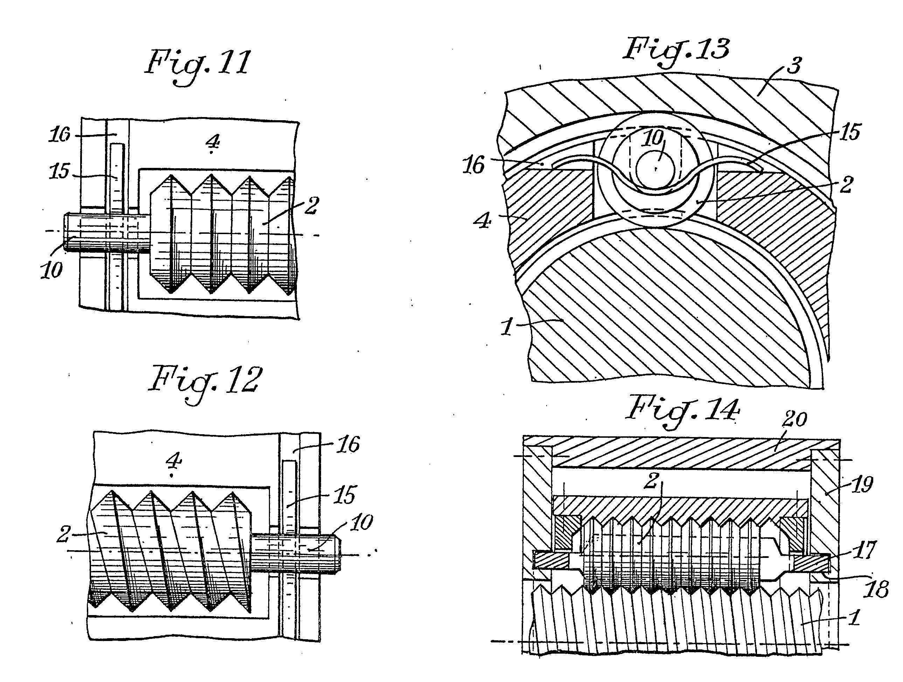

Les figures 11, 12 et 13 sont des vues partielles, à plus grande échelle encore, respectivement de face pour les deux premières et en bout pour la troisième, d'un mode de réalisation de l'agencement facilitant le débrayage des rouleaux, à gorges circulaires dans un cas, filetés dans l'autre.

La figure 14 est une vue en coupe longitudinale, à plus petite échelle, d'un mécanisme suivant l'une quelconque des figures précédentes, dans lequel le centrage de la cage par rapport à la vis est constamment assuré.

Le mécanisme représenté comporte une vis centrale 1, en prise avec les gorges circulaires d'un certain nombre de rouleaux 2, régulièrement répartis autour d'elle, et eux-mêmes en prise avec les gorges circulaires de l'écrou 3 constitué de trois éléments 3a, 3b, 3c susceptibles d'être déplacés radialement.

Ces rouleaux 2 sont maintenus en position angulaire par une cage 4 dans les alvéoles 5 de laquelle ils peuvent se déplacer radialement et également, mais dans des conditions limitées, longitudinalement.

La surface intérieure de la douille comporte un certain nombre d'alvéoles 6, dont le fond n'est par pourvu de gorges circulaires, pour permettre de façon connue en soi le recyclage des rouleaux ou des billes lorsqu'ils ont été déplacés longitudinalement d'une longueur égale à celle du pas de vis de la vis 1, pour être ramenés dans leur position d'origine.

Ces alvéoles 6 sont préférablement prévus au droit des raccordements entre les éléments 3a, 3b, 3c constitutifs de la douille 3.

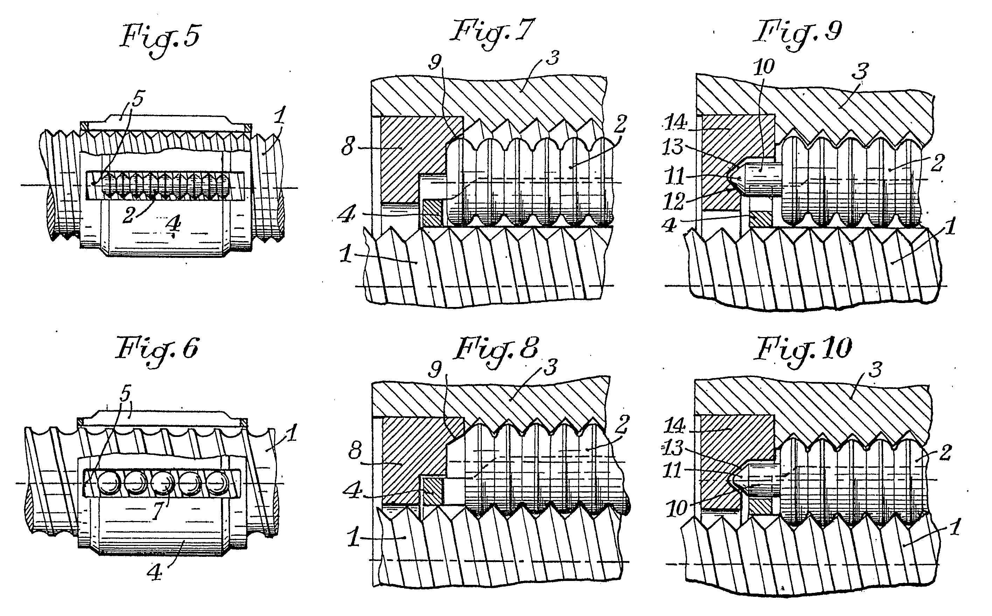

Les figures 5 et 6 montrent plus clairement comment ces rouleaux 2 ou billes 7, sont maintenus dans les alvéoles 5 de la cage 4.

Les figures 7 à 10 illustrent deux possibilités pour assurer l'engrenage de ces rouleaux 2 avec les gorges de l'écrou 3 après débrayage, lorsqu'ils sont dans la position montrée à la figure 7, dans un cas, et à la figure 9, dans l'autre.

L'extrémité de chaque élément de douille 3 comporte une pièce 8 ayant une surface inclinée 9, formant came, dans le prolongement de la surface de la gorge d'extrémité de la douille 3; lors du réembrayage, provoqué par le mouvement centripède des éléments de douille 3 et de la pièce 8, la surface 9 formant came de celle-ci coopère avec la gorge d'extrémité des rouleaux 2 pour la faire pénétrer dans la gorge correspondante de la douille 3.

Dans la variante de réalisation représentée aux figures 9 et 10, les axes 10 des rouleaux 2 ont une extrémité 11 qui coopère avec la surface 12 du logement 13 de la pièce d'extrémité 14, solidaire de la douille 3 pour maintenir les filets ou gorges des rouleaux 2 en prise avec les filets correspondants de la douille 3.

Pour assurer le déplacement radial centrifuge des rouleaux lors du débrayage de la douille 3, leurs axes 10 peuvent reposer sur des ressorts plats 15 logés dans une gorge 16 prévue à cet effet dans la cage 4. Ces ressorts 15 peuvent maintenir constamment le filetage ou les gorges circulaires des rouleaux 2 au contact avec le taraudage out les gorges circulaires des douilles 3, ou, tout au moins, les dégager entièrement du filetage de la vis centrale 1.

Pour éviter que la cage 4 des rouleaux 2 ou billes 7 puisse venir au contact de la vis 1, lors du débrayage des rouleaux 2, elle peut comporter à chacune de ses extrémités, une couronne 17 guidée à l'intérieur d'une gorge correspondante 18 des flasques 19 d'un boîtier 20 entourant le mécanisme débrayable, de vis et écrou à roulement, et à l'intérieur duquel peuvent être logés les dispositifs de commande du déplacement radial des éléments constitutifs de la douille 3 lors du débrayage.

Il est bien entendu que les modes de réalisation qui ont été décrits ci-dessus en référence au dessin annexé ont été donnés à titre purement indicatif et nullement limitatif et que de nombreuses modifications peuvent être apportées sans qu'on s'écarte pour cela du cadre de la présente invention; c'est ainsi notamment que le nombre des rouleaux 2 pourrait être tout autre que quatre et celui de éléments de douille 3 tout autre que trois, que le profil des filetages, taraudages et gorges circulaires pourraient être autres, que le nombre des alvéoles de la douille pour le recyclage des rouleaux peut être supérieure à 1 et se trouver préférablement au droit des surfaces de séparation des éléments de douille, et que la commande non représentée de l'embrayage et du débrayage de la vis par rapport aux éléments de douille 3 peut être de type quelconque.

### Revendications

1. Mécanisme de vis et écrou à roulement constitué par une vis intérieure (1), un écrou extérieur (3) coaxial formant douille, le diamètre extérieur de la vis (1) étant inférieur au diemètre intérieur de l'écrou (3), de façon à laisser entre eux un espace annulaire libre, dans lequel sont logés des éléments roulants (2) tels que rouleaux satellites filetés ou à gorges circulaires, en prise simultanément avec le filetage de la vis (1) et le taraudage de la douille, caractérisé en ce que la douille (3) taraudée ou munie de gorges circulaires intérieures est réalisée en plusieurs parties pouvant s'écarter radialement pour permettre de libérer la vis (1) de toute prise avec les éléments roulants (2) à tout instant que l'ensemble soit immobile ou en rotation indifférente et quelque soit la direction de la charge axiale.

2. Mécanisme suivant la revendication 1, comprenant des éléments roulants logés dans des alvéoles (5) d'une cage monobloc (4), caractérisé en ce que lesdits alvéoles (5) sont tels qu'ils permettent un déplacement axial desdits éléments roulants dans lesdits alvéoles (5) au moins égal à un pas de vis du filetage de la vis (1) pour permettre leur translation dans un sens provoqué par le déplacement angulaire de la vis (1) dans la douille (3) et, en sens inverse, pour le recyclage quand lesdits éléments (2) viennent au droit des alvéoles (6) de la douille (3).

3. Mécanisme selon la revendication 2, caractérisé en ce que l'extrémité de chaque élément de douille (3) comporte une pièce (8) ayant une surface inclinée (9), formant came, dans le prolongement de la surface de la gorge d'extrémité de la douille (3), coopérant lors du réembrayage, provoqué par le mouvement centripète des éléments de douille (3) et de la pièce (8), avec la gorge d'extrémité des rouleaux (2) pour la faire pénétrer dans la gorge correspondante de la douille (3).

4. Mécanisme suivant la revendication 2, caractérisé en ce que les axes (10) des rouleaux (2) ont une extrémité (11) qui coopère avec la surface (12) d'un logement (13) de la pièce d'extrémité (14) solidaire de la douille (3) pour maintenir les gorges et filets des rouleaux (2) en prise avec ceux de la douille (3).

5. Mécanisme suivant l'une quelconque des revendications 1 à 4, caractérisé en ce que pour assurer le déplacement radial centrifuge des rouleaux lors du débrayage de la douille (3), leurs axes (10) reposent sur des ressorts plats (15) logés dans une gorge (16) prévue à cet effet dans la cage (4).

6. Mécanisme suivant l'une quelconque des revendications 1 à 5, caractérisé en ce que, pour éviter que la cage (4) des rouleaux (2) ou billes (7) puisse venir au contact de la vis (1), lors du débrayage des rouleaux (2), elle comporte à chacune de ses extrémités, une couronne (17) guidée à l'intérieur d'une gorge correspondante (18) des flasques (19) d'un boîtier (20) entourant le mécanisme débrayable des vis et écrou à roulement, à l'intérieur duquel peuvent être logés les dispositifs de commande du déplacement axial des éléments constitutifs de la douille (3) lors du débrayage.

**Patentansprüche**

1. Schraubspindelmechanismus mit Rollmutter, bestehend aus einer inneren Schraubspindel (1) und einer dazu koaxialen äußeren Mutter (3) als Spindelhülse, wobei der Außendurchmesser der Spindel (1) kleiner ist als der Innendurchmesser der Mutter (3) derart, daß zwischen beiden ein freier Ringspalt verbleibt, in dem Rollelemente (2), wie Planetenrollen mit Gewinde oder Ringnuten, angeordnet sind, die gleichzeitig mit dem Gewinde der Spindel (1) und dem Innengewinde der Hülse in Eingriff sind, dadurch gekennzeichnet, daß die mit Innengewinde oder ringförmigen Innennuten versehene Hülse (3) aus mehreren Teilen besteht, die Radial ausrückbar sind, um die Spindel (1) außer Eingriff mit den Rollelementen (2) bringen zu können, und zwar zu jedem beliebigen Zeitpunkt bei stillstehendem oder in beliebiger Drehung befindlichem Mechanismus und unabhängig von der Richtung der axialen Belastung.

2. Mechanismus nach Anspruch 1 mit Rollelementen, die in Kammern (5) eines einstückigen Käfigs (4) aufgenommen sind, dadurch gekennzeichnet, daß die Kammern (5) derart ausgebildet sind, daß sie eine axiale Verschiebung der Rollelemente in den Kammern (5) gestatten, die mindestens gleich der Höhe eines Gewindeganges des Gewindes der Spindel (1) ist, um ihre Mitnahme in einer Richtung, die durch die Winkelbewegung der Spindel (1) in der Hülse (3) erzwungen wird, sowie in umgekehrter Richtung für die Rückführung, wenn die Elemente (2) in den Bereich von Ausnehmungen (6) der Hülse (3) gelangen, zu ermöglichen.

3. Mechanismus nach Anspruch 2, dadurch gekennzeichnet, daß am Ende jedes Teiles der Hülse (3) ein Führungsteil (8) mit einer geneigten Fläche (9) vorgesehen ist, die in der Verlängerung der Oberfläche der jeweils letzten Nut der Hülse (3) eine Nockenfläche bildet, die bei dem durch die radial nach innen gerichtete Bewegung der Teile der Hülse (3) und des Führungsstückes (8) erzwungenen Wiedereinrücken mit der Nut am Ende der Rollelemente (2) zusammenwirkt, um diese in die entsprechende Nut der Hülse (3) eindringen zu lassen.

4. Mechanismus nach Anspruch 2, dadurch gekennzeichnet, daß die Achsen (10) der Rollen (2) ein Ende (11) aufweisen, welches mit der Fläche (12) einer Ausnehmung (13) des fest an der Hülse (3) angeordneten Endstückes (14) zusammenwirkt, um die Nuten und gewindegänge der Rollelemente (2) im Eingriff mit denen der Hülse (3) zu halten.

5. Mechanismus nach einem der Ansprüche 1 bis 4, dadurch gekennzeichnet, daß zur Gewährleistung der radial nach außen gerichteten Bewegung der Rollen bei dem Ausrücken der Hülse (3) die Achsen (10) der Rollen auf Blattfedern (15) auflagern, die in einer hierfür vorgesehenen Nut (16) des Käfigs (4) angeordnet sind.

6. Mechanismus nach einem der Ansprüche 1 bis 5, dadurch gekennzeichnet, daß, um eine Berührung des Käfigs (4) der Rollen (2) oder Kugeln (7) mit der Spindel (1) beim Ausrücken der Rollen (2) zu verhindern, der Käfig (4) an jedem seiner Enden einen Kranz (17) trägt, der in einer entsprechenden Nut (18) von Flanschen (19) eines Gehäuses (20) geführt ist, welches den ausrückbaren Spindel-Mutter-Mechanismus umgibt und in welchem die Steuereinrichtungen zum Bewirken der axialen Verschiebung der die Hülse (3) bildenden Elemente beim Ausrücken untergebracht sein können.

## Claims

1. Roller screw and nut mechanism comprising an inner screw (1), a coaxial outer nut (3) forming a sleeve, the outer diameter of the screw (1) being less than the inner diameter of the nut (3) so as to leave between them a free annular space in which are accommodated rolling elements (2), such as planet rollers which are threaded or have circular grooves, simultaneously in engagement with the thread of the screw (1) and the thread of the sleeve, characterised in that the sleeve (3), threaded or provided with inner circular grooves, is made in several parts able to move apart radially so as to enable the screw (1) to be freed from any engagement with the rolling elements (2) at any moment when the assembly is motionless or in neutral rotation and whatever the direction of the axial load.

2. Mechanism according to Claim 1, comprising rolling elements accommodating in cavities (5) of a one-piece cage (4), characterised in said cavities (5) are such that they make possible an axial displacement of said rolling elements in said cavities (5) at least equal to one thread pitch of the screw (1) so as to make possible their translation in one direction, caused by the angular displacement of the screw (1) in the sleeve (3) and, in the opposite direction, for the recirculation when said elements (2) come at right angles with the cavities (6) of the sleeve (3).

3. Mechanism according to Claim 2, characterised in that the end of each sleeve element (3) comprises a part (8) having an inclined surface (9), forming a cam, in the extension of the surface of the end groove of the sleeve (3), cooperating at the time of the re-engagement, caused by the centripetal movement of the elements of the sleeve (3) and of the part (8), with the end groove of the rollers (2) so as to cause it to penetrate into the corresponding groove of the sleeve (3).

4. Mechanism according to Claim 2, characterised in that the pins (10) of the rollers (2) have an end (11) which cooperates with the surface (12) of a recess (13) of the end part (14) rigid with the sleeve (3), so as to maintain the grooves and threads of the rollers (2) in engagement with those of the sleeve (3).

5. Mechanism according to any one of Claims 1 to 4, characterised in that to ensure the radial centrifugal displacement of the rollers during the disengagement of the sleeve (3), their pins (10) rest on flat springs (15) accommodated in a groove (16) provided for this purpose in the cage (4).

6. Mechanism according to any one of Claims 1 to 5, characterised in that to prevent the cage (4) of the rollers (2) or balls (7) from being able to come into contact with the screw (1), during the disengagement of the rollers (2), it comprises at each of its ends a rim (17) guided inside a corresponding groove (18) of the side plates (19) of a casing (20) surrounding the disengageable roller screw and nut mechanism, inside which can be accommodated the devices for controlling the axial displacement of the constituent parts of the sleeve (3) during disengagement.

Fig.2

Fig.1

Fig.4

Fig.3

Fig. 5

Fig. 6

Fig. 7

Fig. 8

Fig. 9

Fig. 10

*Fig. 11*

*Fig. 12*

*Fig. 13*

*Fig. 14*

0025750